# EUROPEAN PATENT SPECIFICATION

(11) **EP 2 502 793 B1**
(45) Date of publication and mention of the grant of the patent: **07.05.2014**
(21) Application number: 11159336.4
(22) Date of filing: 23.03.2011
(51) Int. Cl.: B60R 21/232

(54) **Inflatable airbag**
Aufblasbarer Airbag
Airbag gonflable

(43) Date of publication of application: 26.09.2012
(73) Proprietor: Volvo Car Corporation, 40531 Göteborg (SE)
(72) Inventor: Ehrs, Kenneth, 42542, Hisings Kärra (SE)
(74) Representative: Kraenzmer, Martin

(56) References cited:
- GB-A- 2 383 304
- US-A1- 2006 071 460
- US-A1- 2009 001 694

## Description

### TECHNICAL FIELD

The present disclosure relates to an inflatable airbag according to the preamble of claim 1. The airbag is adapted to deploy in a curtain-like shape over a side surface of a vehicle interior for protecting a vehicle occupant. The disclosure further relates to a vehicle comprising such an inflatable airbag and the use of a second internal seam.

### BACKGROUND

It is well known within the automobile industry to use inflatable airbags in order to protect vehicle occupants in the event of a vehicle collision. Moreover, it is known to use a curtain airbag which inflates from the cant rail of a vehicle in order to at least partly cover a side surface of the vehicle interior. Such a curtain airbag may provide head protection in side impact collisions. It may also be used for protecting the vehicle occupants in a roll-over situation of the vehicle.

Document US 7,740,270 B2 discloses a curtain air bag comprising a main inflation chamber and a sub-inflation chamber which are defined by a partition portion formed by seams inside surfaces of the air bag body, and a gas flow regulation passage formed as a partly non-bonding portion of the partition portion. The main and sub-inflation chambers are respectively located at an upper side and a lower side of the air bag body and communicate with each other through the gas flow regulation passage. The text of US 7,740,270 B2 explains that this kind of curtain airbag can help to reduce the peak acceleration exerted on the vehicle occupant.

Normally, the curtain airbag is stored in/at the cant rail of the vehicle roof in a rolled state and is deployed when needed. In modern vehicles the cant rail frequently has a curved shape. In spite of that, most curtain airbags have a straight upper longitudinal edge. Therefore, the airbag may adapt to the shape of the curved cant rail when the airbag is inflated. This will cause the airbag to slightly bend. There is further a risk that one or more wrinkles are created in the airbag, primarily at the lower longitudinal side of the airbag. Both of these phenomena may affect the airbag in such a way that its longitudinal extension is reduced. Thereby the airbag may be pulled away from the intended coverage zones.

Document US 2006/0071460 A defining the preamble of claim 1 discloses a curtain airbag, which is deployed into the interior of an automobile by introducing a high-pressure gas, which is ejected from an inflator. An auxiliary inflatable chamber defined with respect to a main inflatable chamber is obtained by sewing the air bag body by a substantially one sewing line. The auxiliary and main inflatable chambers are communicated with each other via a narrow orifice type gas flow restriction passage.

### SUMMARY

The object of the present disclosure is to overcome or ameliorate at least one of the disadvantages of the prior art, or to provide a useful alternative.

It is desirable to provide an airbag which may help to reduce the contraction in the longitudinal direction during inflation of the airbag as compared to a prior art airbag.

It is further desirable that the airbag is not pulled away from the intended coverage zones upon deployment. In particular, it is desirable that the rear lower corner of the airbag upon deployment of the airbag actually covers what it is intended to cover in order to protect the head of a possible rear set occupant.

The object above may be achieved by the subject-matter of claim 1.

The term seam is herein used to comprise not only conventional seams, but also welding, thermal bonding, adhesives, clamping or that the airbag has been woven as OWP, i.e. one-piece woven. The term cell denotes herein an airbag structure which has only one in-out passage, while the term channel is used for an airbag structure comprising at least two in-out passages, such that a gas stream may flow through the channel.

The first longitudinal end portion may be located either at the front or the rear end of the airbag, where front and rear relate to the vehicle, in which the airbag is to be mounted. The second longitudinal end portion is the opposite end portion. Hence, if the first longitudinal end portion is at the front, the second longitudinal end portion is at the rear, and vice versa.

When inflating the airbag according to the disclosure, the airbag will contract in the height direction as compared to in a flat state, i.e. unrolled but not inflated, since the airbag expands in the depth direction. Moreover, since the second internal seam is arranged in at least one of the longitudinal end portions, the airbag will in that longitudinal end portion contract more in the height direction as compared to a prior art airbag. Therefore, the airbag according to the disclosure may more easily adapt to the shape of a curved cant rail. In addition, the risk of creating a wrinkle is reduced due to the additional height direction contraction. The above-mentioned problem with longitudinal contraction is therefore at least partly counteracted. Hence the risk of pulling the airbag away from the intended coverage zones is reduced. In particular, by locating the at least one longitudinally extending airbag cell at the rear longitudinal end portion, it may be ensured that the rear lower corner of the airbag upon deployment of the airbag actually covers the intended coverage zone in order to protect the head of a possible rear set occupant. In a similar way, a longitudinally extending airbag cell located at the front longitudinal end portion may help to extend the airbag forwards.

The second internal seam extends substantially in the longitudinal direction of the airbag with a longitudinal extension Lₓ. It may have a straight or a curved shape. It may extend straight in the longitudinal direction or at an angle to the longitudinal direction. In the latter case, the angle would preferably be between +/-45 degrees from the longitudinal direction, most preferably +/- 30 degrees. If the shape is curved, the angle is measured in relation to a straight line passing through the first and second end points of the second internal seam.

The longitudinally extending airbag cell constitutes a part of the at least partly inflatable portion of the airbag. Since the portion of the airbag enclosed by the circumferential seam also comprises inner seams and possibly a non-inflatable region, there will be parts of the airbag which are not intended to be inflated and thus the portion of the airbag is partly inflatable. In addition, the airbag may extend outside of the circumferential seam and these areas will not be inflated either. The first end point of the second internal seam may be located in/on the circumferential seam or adjacent to it. One intention of the second internal seam is to form a longitudinally extending airbag cell which is open in the direction towards the rest of the airbag.

The inflated volume of the longitudinally extending airbag cell may constitute at least 4%, preferably at least 7% and most preferably at least 10% of the inflated volume of the at least partly inflatable portion of the airbag. Thereby the longitudinally extending airbag cell is large enough to influence the behaviour of the airbag upon deployment in such a way that the above-mentioned longitudinal contraction is counteracted in an appropriate manner.

One, two, three or more second internal seams may be placed at either or both end portions. The number of second internal seams, their lengths, shapes and locations are preferably adapted to the curvature of the cant rail of the vehicle in which the airbag is to be mounted.

The longitudinally extending airbag cell may be arranged such that, in an inflated state of the airbag, the longitudinally extending airbag cell has a longer extension in the longitudinal direction than in the depth and/or height directions.

The inflatable airbag may comprise a first longitudinal side comprising fastening means for attaching the airbag to a vehicle cant rail and a second longitudinal side being opposite to the first longitudinal side when the airbag is deployed, the longitudinally extending airbag cell being located along the second longitudinal side of the airbag, i.e. at the lower part of the deployed airbag. The longitudinally extending airbag cell may then help to expand the rear and/or front lower corners in the longitudinal direction in order to counteract any tendency for the corner to be pulled away from the intended coverage zone upon deployment of the airbag.

The second internal seam may be located at a height position located between 20% and 80% of the height of the airbag in a flat state, preferably between 30% and 70% and most preferably between 40% and 60%. These numbers relate to the case when one second internal seam is used. If two or more second internal seams are used, they may be distributed over between 20% and 80% of the height.

A longitudinal distance Dₓ of the second internal seam may be defined as the distance from the second end point of the second internal seam to any of the at least a first internal seam. The longitudinal distance Dₓ may be between 50% and 500% of the longitudinal extension Lₓ of the second internal seam, preferably between 60% and 300% and most preferably between 80% and 150%. The longitudinal distance Dₓ may be at least 10 cm, preferably at least 15 cm and most preferably at least 20 cm. The longitudinal distance Dₓ may coincide with the distance r, but in most cases Dₓ > r.

The width of the second internal seam may vary along its longitudinal extension, such that the second internal seam is wider at the first end point than at the second end point, for example by having a triangular shape with the base of the triangle going through the first end point. In some cases, an internal seam is ended by a more or less round head; in that case the width at the second end point is determined just before this head. The first end point is defined as being located at half the width of the second internal seam at its end adjacent to the circumferential seam.

By means of varying the width of the second internal seam, the local contraction of the airbag in the height direction may be influenced. This may be used to adapt the contraction of the airbag in the height direction to the curvature of the cant rail of a vehicle. The width of the second internal seam may vary in an essentially uniform manner, for example having a triangular shape with its base at an end portion, or in a non-uniform manner, for example by means of curved seams.

The at least one of the first or second longitudinal end portions may comprise one or a plurality of the second internal seam/s. Either one of the first and second longitudinal end portions, or both, may comprise at least one of the second internal seams.

In a second aspect of the present disclosure, there is provided a vehicle comprising an inflatable airbag as mentioned above, the vehicle comprising a curved cant rail, wherein the second internal seam contracts the inflatable airbag in the height direction during deployment of the airbag, such that the magnitude of the contraction corresponds essentially to the curvature of the cant rail in the height direction. In such a vehicle the above-mentioned problems with longitudinal contraction of the airbag pulling it away from the intended coverage zone and the risk of creating a wrinkle may be at least partly counteracted. The number of second internal seams, their lengths, shapes and locations are preferably adapted to the curvature of the cant rail of the vehicle.

### BRIEF DESCRIPTION OF THE DRAWINGS

The present invention will hereinafter be further explained by means of non-limiting examples with reference to the appended drawings wherein:
- Fig. 1: is a schematic drawing of a prior art airbag in a flat state;
- Fig. 2: is a schematic drawing of the prior art airbag of Fig. 1 in an inflated state;
- Fig. 3: is a schematic drawing of an airbag according to a first embodiment of the invention in a flat state;
- Fig. 4: is a schematic drawing of the airbag of Fig. 3 in an inflated state;
- Fig. 5: is a schematic drawing of an airbag according to a second embodiment of the invention in a flat state;
- Fig. 6: is a schematic drawing of an airbag according to a third embodiment of the invention in a flat state;
- Fig. 7: is a schematic drawing of an airbag according to a fourth embodiment of the invention in a flat state; and
- Fig. 8: is a schematic drawing of an airbag according to a fifth embodiment of the invention in a flat state.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

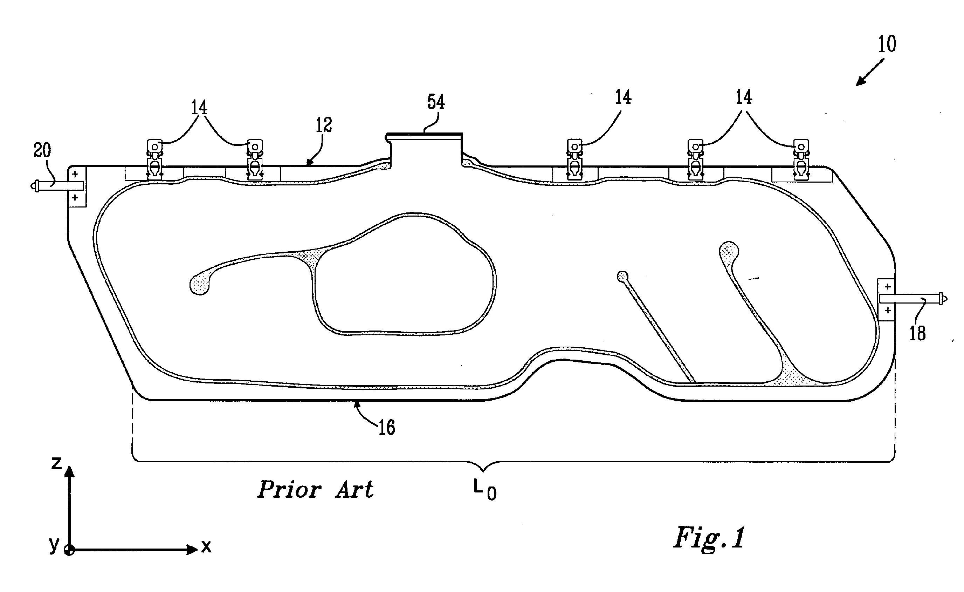

Figure 1 schematically illustrates an airbag 10 according to prior art in a flat state, i.e. unrolled but not inflated. The airbag 10 has a longitudinal direction x, a depth direction y and a height direction z. These directions coincide with the corresponding directions of a vehicle such as a car, in which the airbag is to be mounted, such that the longitudinal direction x coincides with the length of the vehicle, the depth direction y coincides with the width of the vehicle and the height direction z coincides with the height of the vehicle.

The airbag 10 comprises a first longitudinal side 12 with fastening means 14 for attaching the airbag 10 to a vehicle cant rail and a second longitudinal side 16 opposite to the first longitudinal side 12. The second longitudinal side 16 has a length L₀ in the longitudinal direction x, where the subscript 0 denotes that it is the length in the flat state. A front tether 18 may be attached to the vehicle, e.g. to the A-pillar. A rear tether 20 may also be attached to the vehicle. The terms front and rear relate to the front and rear of the vehicle, in which the airbag 10 is to be mounted.

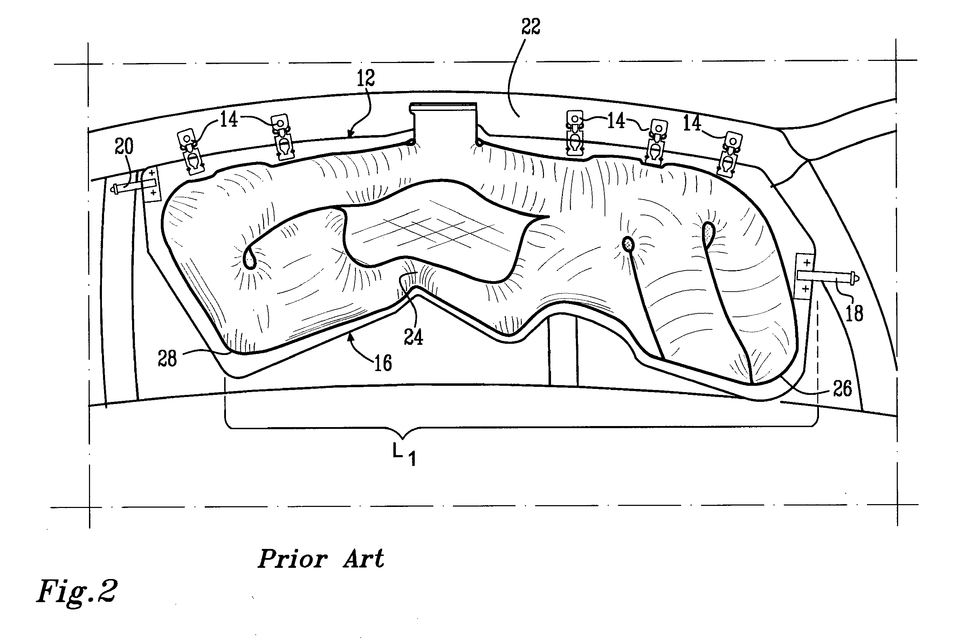

Figure 2 illustrates the airbag 10 of Figure 1 in an inflated state when mounted in a vehicle. The cant rail 22 of the vehicle has a curved shape, which is common in modern vehicles. As can be seen from Figure 1, the first longitudinal side 12 is substantially straight in the flat state of the airbag 10. However, when the airbag 10 is deployed as seen in Figure 2, the first longitudinal side 12 of the airbag will adapt to the curvature of the cant rail 22 and thus also be curved. As a result of the curved shape, the longitudinal extension L₁ of the airbag 10 is reduced as compared to the flat state of Figure 1.

In addition, the curved shape causes a wrinkle 24 to be formed adjacent to the second longitudinal side 16. The wrinkle 24 deforms the airbag 10 and makes the airbag 10 contract even more in the longitudinal direction x, thereby further reducing the longitudinal extension L₁ of the airbag 10. The longitudinal extension L₁ in the inflated state is thus less than the longitudinal extension L₀ in the flat state. Along the first longitudinal side 12 the fastening means 14 and the tethers 18, 20 will help to retain the airbag 10 in an extended state in the x direction. However, at the second longitudinal side 16, lower corners 26, 28 will be displaced towards the centre of the airbag 10. Thereby, the airbag 10 may be pulled away from the intended coverage zones. At the front end, the front tether 18 will tend to counteract this displacement. As such, for an airbag 10 like the one exemplified in Figure 2, the largest displacement will occur at the rear corner 28.

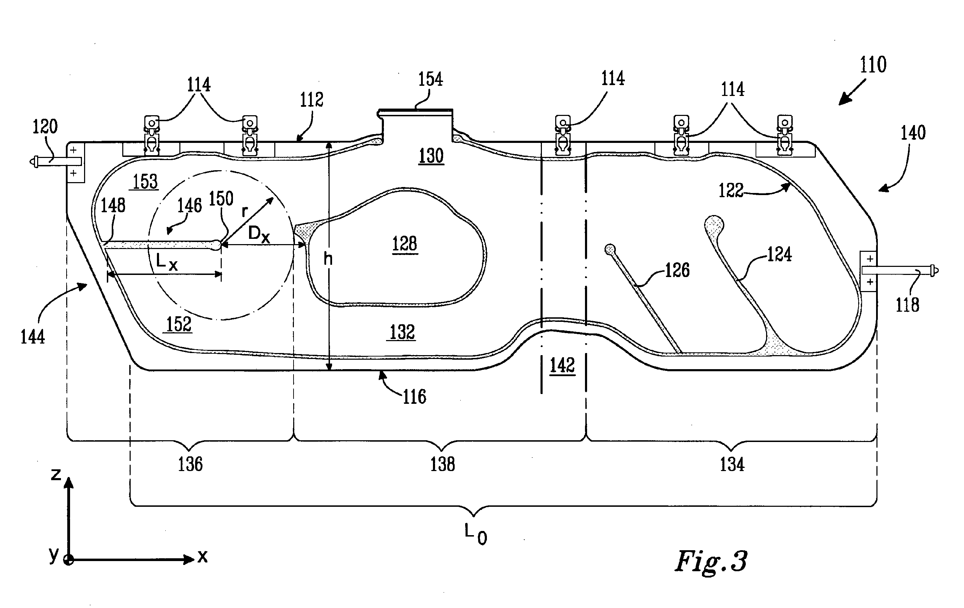

In Figure 3, an airbag 110 according to a first embodiment of the invention is illustrated in a flat state. Similar to the prior art airbag 10 of Figures 1 and 2, the airbag 110 according to the first embodiment has a longitudinal direction x, a depth direction y and a height direction z and comprises a first longitudinal side 112 with fastening means 114 for attaching the airbag 110 to a vehicle cant rail, and a second longitudinal side 116 opposite to the first longitudinal side 112. A front tether 118 and a rear tether 120 may be attached to the vehicle.

A circumferential seam 122 along at least a portion of the circumference of the airbag 110 encloses an at least partly inflatable portion of the airbag 110. At least a first internal seam 124, 126 within the airbag 110 may be used to control the deployment of the airbag 110, by means of guiding the gas streams of the inflating gas. Further, a non-inflatable region 128 within the at least partly inflatable portion of the airbag 110 may be defined by a first internal seam 126, resulting in that not the entire airbag 110 is inflated upon deployment of the airbag 110. The non-inflatable region 128 may also be used to control the inflating of the airbag 110 in a similar way as the first internal seams 124, 126. In this example an upper channel 130 and a lower channel 132 are formed in the airbag 110 by the non-inflatable region 128. The terms upper and lower refer to when the airbag 110 has deployed inside a vehicle.

The airbag 110 further comprises a first longitudinal end portion 134, a second longitudinal end portion 136, and a central portion 138 therebetween. The first longitudinal end portion 134 is in this example located at the front end 140 of the airbag 110 and extends between the front end 140 of the airbag 110 and the location 142 of the seat belt at the B-pillar of the vehicle, here indicated by dashed lines. The second longitudinal end portion 136 is located at the rear end 144 of the airbag 110 and extends between the rear end 144 of the airbag 110 and the non-inflatable region 128. The central region 138 extends between the first longitudinal end portion 134 and the second longitudinal end portion 136. Each end portion therefore makes up about a third of the longitudinal extension of the airbag 110.

At least one of the longitudinal end portions, here the second longitudinal end portion 136 being at the rear end 144, comprises a second internal seam 146 extending substantially in the longitudinal direction between a first end point 148 adjacent to the circumferential seam 122 and a second end point 150 located longitudinally closer to the centre of the airbag than the first end point 122. The second internal seam 146 forms together with a portion of the circumferential seam 122 a longitudinally extending airbag cell 152 below the second internal seam 146. In a similar way, an additional longitudinally extending airbag cell 153 is formed above the second internal seam 146.

The second internal seam 146 has a longitudinal extension Lₓ. If the second internal seam 146 extends substantially straight in the longitudinal direction, the longitudinal extension Lₓ is substantially equal to the length of the second internal seam 146 as illustrated in Figure 3. However, if the second internal seam 146 is curved or extends at an angle to the longitudinal direction x, its actual length will be greater the longitudinal extension Lₓ.

The second end point 150 forms the centre of a circle having a radius r, where r is defined as the shortest distance to the most adjacent of any first internal seams 124, 126 or the circumferential seam 122, including the first internal seam forming the non-inflatable region 128. Further, there is a longitudinal distance Dₓ from said second end point 150 of the second internal seam 146 to any of the first internal seams 124, 126. The longitudinal distance Dₓ may coincide with the radius r, but in most cases Dₓ > r.

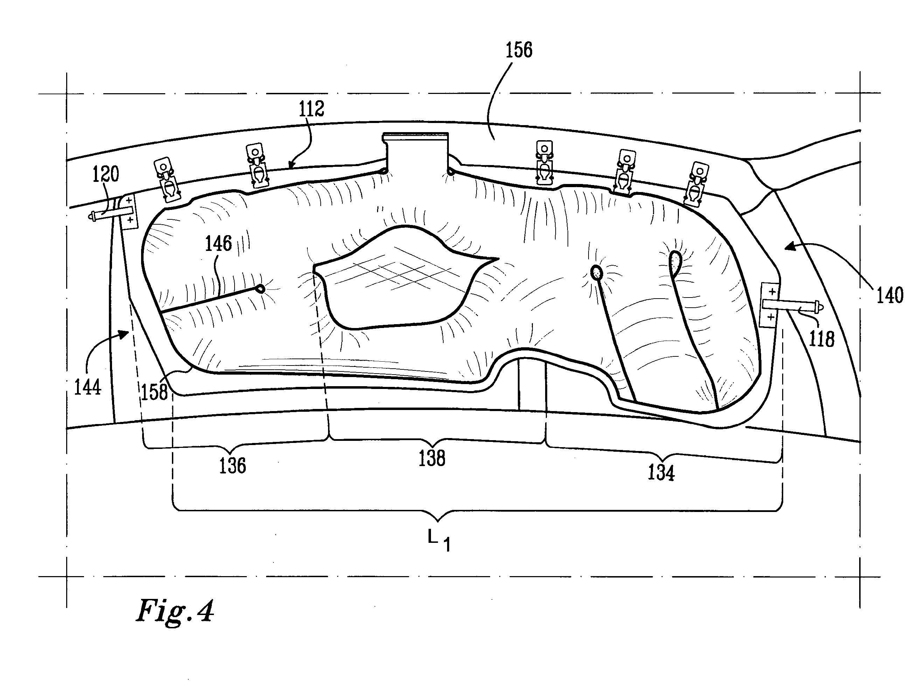

When the airbag 110 is to be deployed by means of inflation, gas will be injected through gas inlet 154. In the example of Figure 3, the non-inflatable region 128 is located opposite the gas inlet 154 and helps to direct the gas stream forwards and backwards in the longitudinal direction x. Thereby the airbag cell 152, as well as the additional longitudinally extending airbag cell 153, are filled by a substantially longitudinally directed gas stream. Figure 4 illustrates the airbag 110 of Figure 3 in an inflated state when mounted in a vehicle. The first longitudinal side 112 of the airbag 110 has adapted to the curvature of the cant rail 156 of the vehicle, such that the inflated airbag 110 also has a curved shape. When inflating the airbag 110, it will contract in the height direction z as compared to in the flat state illustrated in Figure 3 due to it expanding in the depth direction y. Moreover, since the second internal seam 146 is arranged in at least one of the longitudinal end portions 134, 136, the airbag 110 will contract even more in the height direction z in this longitudinal end portion due to the second internal seam 146. Thereby the above-mentioned longitudinal contraction, explained in conjunction with Figure 2 is at least partly counteracted. Consequently, the risk of pulling the front end 140 and/or the rear end 144 away from the intended coverage zones is decreased. In addition, this may also reduce the risk of wrinkles forming adjacent to the second longitudinal side 116.

In the example of Figures 3 and 4, the second internal seam 146 is located at the second longitudinal end portion 136, in this example being the rear longitudinal end portion. The second internal seam 146 will thus help to retain the rear end 144 at its intended coverage zone during deployment. Since the airbag cells 152, 153, are filled by substantially longitudinally directed gas streams, the gas stream will help to extend them in the longitudinal direction. In particular, the airbag cell 152 will help to expand the lower rear corner 158 of the airbag 110. This is especially useful in order to protect a head of a rear seat passenger in case of a side-impact collision, such that the head does not hit the side window behind the airbag.

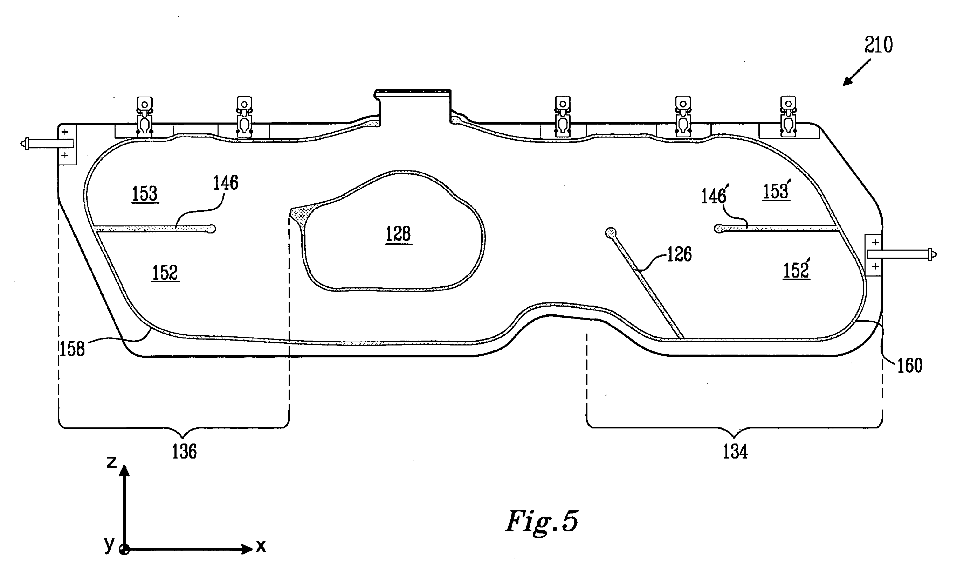

Figure 5 illustrates an airbag 210 according to a second embodiment of the invention in a flat state. It has a second internal seam 146, 146' at both longitudinal end portions. Thereby a longitudinally extending airbag cell 152, 152' is formed below the second internal seam 146, 146' in each longitudinal end portion, in a similar way as described above for the first embodiment. These airbag cells 152, 152' will help to expand the lower rear and front corners 158, 160 when the airbag 210 is deployed. Further, an additional longitudinally extending airbag cell 153, 153' is formed above the second internal seam 146, 146' at both longitudinal end portions.

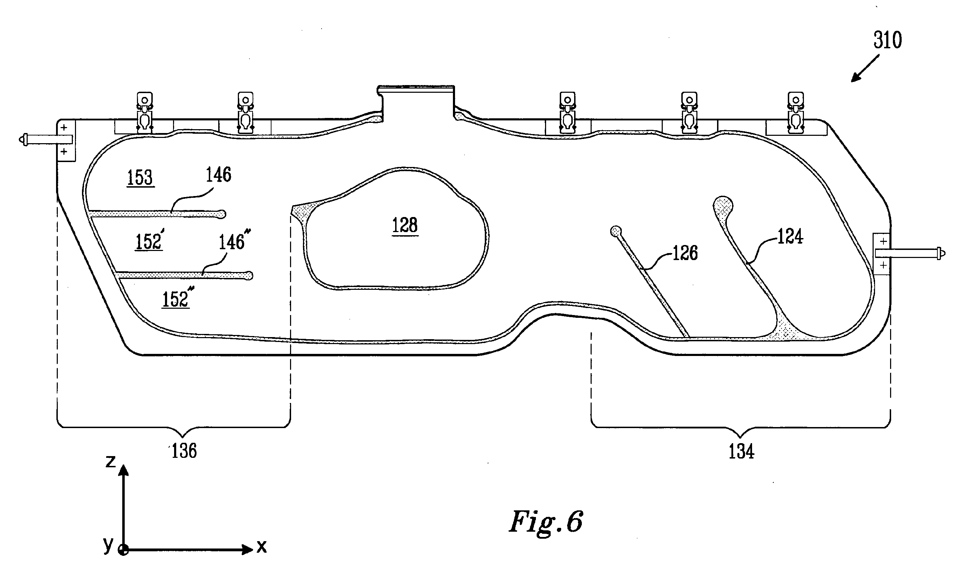

In Figure 6, an airbag 310 according to a third embodiment of the invention is illustrated in a flat state. It has two second internal seams 146, 146" at the second end portion. The second internal seams 146, 146' may be uniformly distributed in the height direction as illustrated in Figure 6, or they may be unevenly distributed. Thereby longitudinally extending airbag cells 152, 152", 153 are formed in a similar way as described above for the first embodiment. These airbag cells will help to expand the second end portion 136 when the airbag 310 is deployed. By adding an extra second internal seam 146" as compared to the first embodiment, the airbag 310 will contract more in the height direction z at the second end portion as compared to in Figure 4. The extra second internal seams 146" may thus be used in conjunction with a cant rail which is more curved than that of Figure 4.

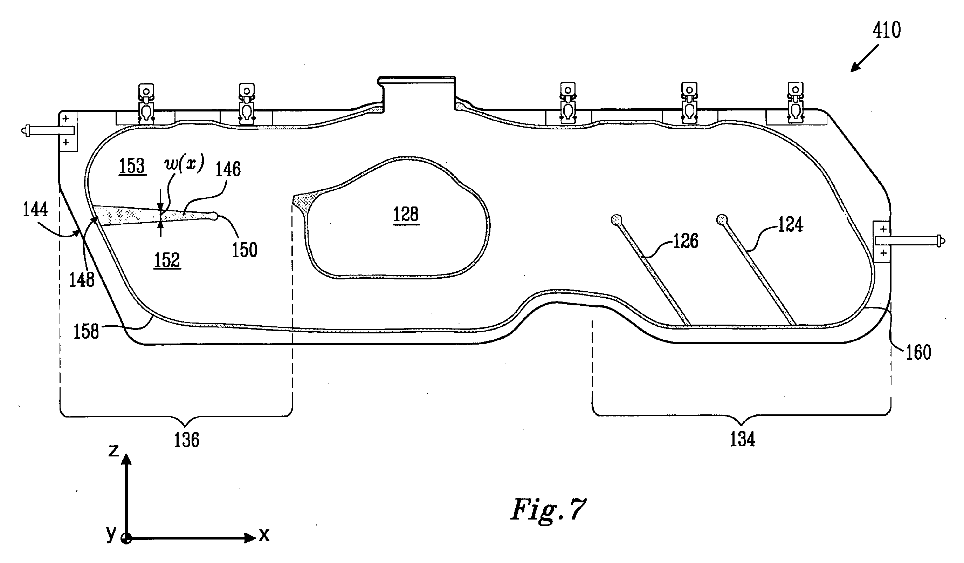

Figure 7 illustrates an airbag 410 according to a fourth embodiment of the invention in a flat state. The airbag 410 has a second internal seam 146 at its second end portion 136, here the rear end portion. As can be seen from the figure, the width w(x) of the second internal seam 146 varies along its longitudinal extension x, such that the second internal seam 146 is wide at the first end point 148 and narrow at the second end point 150. By means of varying the width w(x) of the second internal seam 146, the local contraction of the airbag in the height direction may be influenced. In the illustrated example, the airbag 410 will contract most in the height direction at the rear end 144, since the second internal seam 146 is widest there. This may be used to adapt the contraction of the airbag in the height direction z to the curvature of the cant rail. The width w(x) of the second internal seam 146 may vary in an essentially uniform manner as in Figure 7, where it has a triangular shape having its base at the rear end 144, or in a non-uniform manner.

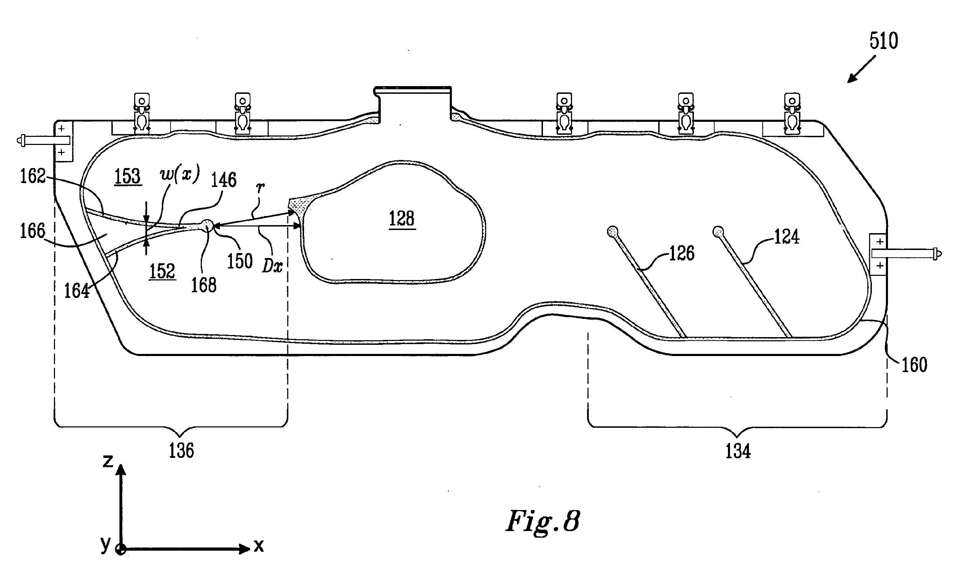

As an alternative to the second internal seam of Figure 7, a wide second internal seam 146 may be provided by arranging a seam forming the outer contour of the second internal seam 146 as illustrated in Figure 8, where the second internal seam 146 comprises two leg seams, a first leg seam 162 and a second leg seam 164. The region 166 enclosed by the leg seams 162, 164 is not inflated at deployment of the airbag. As an option, also the enclosed region 166 within the second internal seam 146 may be inflated, for example at a lower rate than the rest of the airbag. In that case, one or more inflation openings may be provided in at least one of the leg seams 162, 164 (not illustrated). The leg seams 162, 164 may be straight or have a curved shape, bending inwards and/or outwards in relation to the enclosed region 166.

In some cases, the second internal seam 146 is ended by a more or less round head 168. The width at the second end point 150 is in that case determined disregarding the head 168, for example by measuring the width of the second internal seam 146 just before the head 168. However, the circle explained above in conjunction with Figure 3, i.e. the circle having a radius r, where r is defined as the shortest distance to the most adjacent of any first internal seams 124, 126 or the circumferential seam 122, including the first internal seam forming the non-inflatable region 128, is anyway measured from the second end point 150. So is also the longitudinal distance Dₓ of the second internal seam, i.e. the longitudinal distance from the second end point 150 of the second internal seam 146 to any of the at least a first internal seam 124,126.

Further modifications of the invention within the scope of the appended claims are feasible. As such, the present invention should not be considered as limited by the embodiments and figures described herein. Rather, the full scope of the invention should be determined by the appended claims, with reference to the description and drawings.

In particular, one, two, three or more second internal seams may be placed at either or both end portions. The number of second internal seams, their lengths, shapes and locations are preferably adapted to the curvature of the cant rail of the vehicle, in which the airbag is to be mounted.

## Claims

1. An inflatable airbag (110) adapted to deploy In a curtain-like shape over a side surface of a vehicle interior for protecting a vehicle occupant,
said airbag (110) having a longitudinal (x), a depth (y) and a height (z) direction, said airbag (110) comprising a first longitudinal end portion (134), a second longitudinal end portion (136), and a central portion (138) therebetween having a centre,
said airbag (110) further comprising a circumferential seam (122) along substantially its entire circumference, said circumferential seam (122) enclosing an at least partly inflatable portion of said airbag (110),
said airbag (110) further comprising at least a first Internal seam (124, 126) surrounded by said circumferential seam (122),
said Airbag (110) comprises a second internal seam (146) In at least one of said first or second longitudinal end portions (134, 136), said second internal seam (146) extending substantially In said longitudinal direction between a first end point (148) adjacent to said circumferential seam (122) and a second end point (150) located longitudinally closer to said centre of said airbag (110) than said first end point (148), said second internal seam (146) together with a portion of said circumferential seam (122) forming a longitudinally extending airbag cell (152), which has only one in-out passage and is open in the direction towards the rest of the airbag,
said second end point (150) being spaced from any of said at least a first internal seam (124, 126) and said circumferential seam (122) by a distance (r) of at least 10 cm, preferably at least 15 cm and most preferably at least 20 cm, such that, when said airbag (110) is deployed, said longitudinally extending airbag cell (152) is pressurized at substantially the same rate as the rest of said Inflatable portion of said airbag (110),
**characterized in that**
said airbag (110) further comprises a non-inflatable region (128), the longitudinal distance (Dₓ) from said second end point (150) of said second internal seam (146) to said non-inflatable region (128), being between 50% and 500% of the longitudinal extension (Lₓ) of said second internal seam (146), preferably between 60% and 300% and most preferably between 80% and 150%, and
said airbag (110) further comprises a gas inlet (154), said gas inlet (154) being located at said circumferential seam (122) In a location facing said non-inflatable region (128).

2. The inflatable airbag (110) according to claim 1, wherein the Inflated volume of said longitudinally extending airbag cell (152) constitutes at least 4%, preferably at least 7% and most preferably at least 10% of the Inflated volume of said at least partly inflatable portion of said airbag (110).

3. The inflatable airbag (110) according to claim 1 or 2, wherein said longitudinally extending airbag cell (152) is arranged such that in an inflated state of said airbag (110), said longitudinally extending airbag cell (152) has a longer extension In said longitudinal direction (x) than in said depth (y) and/or height (z) directions.

4. The Inflatable airbag (110) according to any one of the preceding claims, wherein said longitudinally extending airbag cell (152) is arranged to be filled by a substantially longitudinally directed gas stream during deployment of said airbag (110).

5. The inflatable airbag (110) according to any one of the preceding claims, wherein said airbag (110) comprises a first longitudinal side (112) comprising fastening means (114) for attaching said airbag (110) to a vehicle cant rail and a second longitudinal side (116) being opposite to said first longitudinal side (112) when said airbag (110) is deployed, said longitudinally extending airbag cell (152) being located along said second longitudinal side (116) of said airbag (110).

6. The inflatable airbag (110) according to any one of the preceding claims, wherein said second internal seam (146) is located at a height position located between 20% and 80% of the height (h) of the airbag In a flat state, preferably between 30% and 70% and most preferably between 40% and 60%.

7. The inflatable airbag (110) according to any one of the preceding claims, wherein a longitudinal distance (Dₓ) from said second end point (150) of said second internal seam (146) to any of said at least a first internal seam (124, 126) of said airbag (110) is between 50% and 500% of the longitudinal extension (Lₓ) of said second internal seam (146), preferably between 60% and 300% and most preferably between 80% and 150%.

8. The inflatable airbag (110) according to any one of the preceding claims, wherein the width (w(x)) of said second internal seam (146) varies along Its longitudinal extension, such that the second internal seam (146) is wider at the first end point (148) than at the second end point (150), for example by having a triangular shape with the base of said triangle going through said first end point (148).

9. The inflatable airbag (110) according to any one of the preceding claims, wherein said at least one of said first or second longitudinal end portions (134, 136) comprises a plurality of said second internal seams (146).

10. The Inflatable airbag (110) according to any one of the preceding claims, wherein both of said first and second longitudinal end portions (134, 136) of said airbag (110) comprise at least one of said second internal seams (146).

11. The inflatable airbag (110) according to any one of the preceding claims, wherein said non-inflatable region (128) forms an upper channel (130) and a lower channel (132) of said airbag (110) during deployment.

12. The Inflatable airbag (110) according to any one of the preceding claims, wherein said longitudinally extending airbag cell (152) is located at a rear lower corner (158) and/or a front lower corner (160),

13. A vehicle comprising an inflatable airbag (110) according to any one of the preceding claims, said vehicle comprising a curved cant rail (156), wherein said second internal seam (146) contracts said inflatable airbag (110) in said height direction (z) during deployment of said airbag, such that the magnitude of said contraction corresponds essentially to the curvature of said cant rail in said height direction (z).

## Patentansprüche

1. Aufblasbarer Airbag (110), angepasst an eine Anwendung in einer Vorhang-ähnlichen Form über eine Seitenfläche eines Fahrzeuginnerens zum Schützen eines Fahrzeuginsassen,
wobei der Airbag (110) eine Längsrichtung (x), eine Tiefenrichtung (y) und eine Höhenrichtung (z) aufweist,
wobei der Airbag (110) einen ersten Längenendbereich (134), einen zweiten Längenendbereich (136) und einen mittleren Bereich (138) und dazwischen eine Mitte aufweist,
wobei der Airbag (110) ferner eine umlaufende Naht (122) entlang im Wesentlichen seinem gesamten Umfang aufweist, wobei die umlaufende Naht (122) einen wenigstens teilweise aufblasbaren Teil des Airbags (110) umschließt,
wobei der Airbag (110) ferner wenigstens eine erste innere Naht (124, 126) aufweist, die von der umlaufenden Naht (122) umgeben ist,
wobei der Airbag (110) eine zweite innere Naht (146) in wenigstens einem des ersten oder zweiten Längenendbereichs (134, 136) aufweist, wobei sich die zweite innere Naht (146) im Wesentlichen in der Längsrichtung zwischen einem ersten Endpunkt (148) neben der umlaufenden Naht (122) und einem in Längsrichtung näher an der Mitte des Airbags (110) als der erste Endpunkt (148) liegenden zweiten Endpunkt (150) erstreckt, wobei die zweite innere Naht (146) zusammen mit einem Teil der umlaufenden Naht (122) eine sich in Längsrichtung erstreckende Airbagzelle (152) bildet, die nur eine Ein-Aus-Passage aufweist und in der Richtung zum Rest des Airbags hin geöffnet ist,
wobei der zweite Endpunkt (150) zu jeder der wenigstens ersten inneren Naht (124, 126) und der umlaufenden Naht (112) um einen Abstand (r) von wenigstens 10 cm, bevorzugt wenigstens 15 cm und am meisten bevorzugt wenigstens 20 cm auf solche Weise beabstandet ist, dass, wenn der Airbag (110) angewandt wird, die sich in Längsrichtung erstreckende Airbagzelle (152) mit im Wesentlichen der gleichen Rate wie der Rest des aufblasbaren Teils des Airbags (110) mit Druck beaufschlagt wird,
**dadurch gekennzeichnet, dass**
der Airbag (110) ferner einen nicht-aufblasbaren Bereich (128) aufweist, wobei der Längsabstand (Dₓ) vom zweiten Endpunkt (150) der zweiten inneren Naht (146) bis zum nicht-aufblasbaren Teil (128) zwischen 50 % und 500 %, bevorzugt zwischen 60 % und 300 % und am meisten bevorzugt zwischen 80 % und 150 % der Längsausdehnung (Lₓ) der zweiten inneren Naht (146) beträgt, und wobei der Airbag (110) ferner einen Gaseinlass (154) aufweist, wobei der Gaseinlass (154) an der umlaufenden Naht (122) an einer Stelle angeordnet ist, die zum nicht-aufblasbaren Bereich (128) hin gerichtet ist.

2. Aufblasbarer Airbag (110) nach Anspruch 1, wobei das aufgeblasene Volumen der sich in Längsrichtung erstreckenden Airbagzelle (152) wenigstens 4 %, bevorzugt wenigstens 7 % und am meisten bevorzugt wenigstens 10 % des aufgeblasenen Volumens des wenigstens teilweise aufblasbaren Teils des Airbags (110) ausmacht.

3. Aufblasbarer Airbag (110) nach Anspruch 1 oder 2, wobei die sich in Längsrichtung erstreckende Airbagzelle (152) derart angeordnet ist, dass die sich in Längsrichtung erstreckende Airbagzelle (152) in einem aufgeblasenen Zustand des Airbags (110) eine größere Ausdehnung in der Längsrichtung (x) als in der Tiefenrichtung (y) und/oder der Höhenrichtung (z) aufweist.

4. Aufblasbarer Airbag (110) nach einem der vorhergehenden Ansprüche, wobei die sich in Längsrichtung erstreckende Airbagzelle (152) für ein Befüllen durch einen im Wesentlichen in Längsrichtung gerichteten Gasstrom während der Anwendung des Airbags (110) angeordnet ist.

5. Aufblasbarer Airbag (110) nach einem der vorhergehenden Ansprüche, wobei der Airbag (110) eine erste Längsseite (112) aufweist, die Befestigungsmittel (114) für ein Anbringen des Airbags (110) an einem Fahrzeugdachlängsträger und eine zweite, bei Anwendung des Airbags (110) der ersten Längsseite (112) gegenüberliegenden Längsseite (116) aufweist, wobei die sich in Längsrichtung erstreckende Airbagzelle (152) entlang der zweiten Längsseite (116) des Airbags (110) angeordnet ist.

6. Aufblasbarer Airbag (110) nach einem der vorhergehenden Ansprüche, wobei die zweite innere Naht (146) in einer Höhenposition angeordnet ist, die zwischen 20 % und 80 %, bevorzugt zwischen 30 % und 70 % und am meisten bevorzugt zwischen 40 % und 60 % der Höhe (h) des Airbags in einem nicht aufgeblasenen Zustand positioniert ist.

7. Aufblasbarer Airbag (110) nach einem der vorhergehenden Ansprüche, wobei ein Längsabstand (Dₓ) vom zweiten Endpunkt (150) der zweiten inneren Naht (146) bis zu einem der wenigstens einen ersten inneren Naht (124, 126) des Airbags (110) zwischen 50 % und 500 %, bevorzugt zwischen 60 % und 300 % und am meisten bevorzugt zwischen 80 % und 150 % der Längsausdehnung (Lₓ) der zweiten inneren Naht (146) beträgt.

8. Aufblasbarer Airbag (110) nach einem der vorhergehenden Ansprüche, wobei die Breite (w(x)) der zweiten inneren Naht (146) entlang ihrer Längsausdehnung derart variiert, dass die zweite innere Naht (146) am ersten Endpunkt (148) breiter ist als am zweiten Endpunkt (150), zum Beispiel durch Aufweisen einer Dreiecksform, bei der die Basis durch den ersten Endpunkt (148) verläuft.

9. Aufblasbarer Airbag (110) nach einem der vorhergehenden Ansprüche, wobei wenigstens einer des ersten oder zweiten Längenendbereichs (134, 136) mehrere zweite innere Nähte (146) aufweist.

10. Aufblasbarer Airbag (110) nach einem der vorhergehenden Ansprüche, wobei sowohl der erste als auch der zweite Längenendbereich (134, 136) des Airbags (110) wenigstens eine der zweiten inneren Nähte (146) aufweist.

11. Aufblasbarer Airbag (110) nach einem der vorhergehenden Ansprüche, wobei der nicht-aufblasbare Bereich (128) einen oberen Kanal (130) und einen unteren Kanal (132) des Airbags (110) während dessen Anwendung bildet.

12. Aufblasbarer Airbag (110) nach einem der vorhergehenden Ansprüche, wobei die sich in Längsrichtung erstreckende Airbagzelle (152) an einer hinteren unteren Ecke (158) und/oder einer vorderen unteren Ecke (160) angeordnet ist.

13. Fahrzeug, aufweisend einen aufblasbaren Airbag (110) nach einem der vorhergehenden Ansprüche, wobei das Fahrzeug einen gekrümmten Dachlängsträger (156) aufweist, wobei die zweite innere Naht (146) den aufblasbaren Airbag (110) während der Anwendung des Airbags in der Höhenrichtung (z) derart zusammenzieht, dass die Größe der Kontraktion im Wesentlichen der Krümmung des Dachlängsträgers in der Höhenrichtung (z) entspricht.

## Revendications

1. Airbag gonflable (110) prévu pour se déployer en forme de rideau par-dessus une surface latérale d'un intérieur de véhicule pour protéger un occupant de véhicule,
ledit airbag (110) ayant une direction longitudinale (x), une direction en profondeur (y) et une direction en hauteur (z), ledit airbag (110) comprenant une première portion d'extrémité longitudinale (134), une deuxième portion d'extrémité longitudinale (136), et une portion centrale (138) entre elles ayant un centre,
ledit airbag (110) comprenant en outre un joint circonférentiel (122) le long de substantiellement toute sa circonférence, ledit joint circonférentiel (122) renfermant une portion au moins partiellement gonflable dudit airbag (110), ledit airbag (110) comprenant en outre au moins un premier joint interne (124, 126) entouré par ledit joint circonférentiel (122),
ledit airbag (110) comprenant un deuxième joint interne (146) dans au moins l'une desdites première ou deuxième portions d'extrémité longitudinales (134, 136), ledit deuxième joint interne (146) s'étendant substantiellement dans ladite direction longitudinale entre un premier point d'extrémité (148) adjacent audit joint circonférentiel (122) et un deuxième point d'extrémité (150) situé longitudinalement plus près dudit centre dudit airbag (110) que ledit premier point d'extrémité (148), ledit deuxième joint interne (146) conjointement avec une portion dudit joint circonférentiel (122) formant une cellule d'airbag s'étendant longitudinalement (152), qui présente seulement un passage d'entrée-sortie et est ouverte dans la direction du reste de l'airbag,
ledit deuxième point d'extrémité (150) étant espacé de l'un quelconque desdits au moins un premier joint interne (124, 126) et dudit joint circonférentiel (122) d'une distance (r) d'au moins 10 cm, de préférence d'au moins 15 cm et plus préférablement d'au moins 20 cm, de telle sorte que lorsque ledit airbag (110) est déployé, ladite cellule d'airbag s'étendant longitudinalement (152) soit pressurisée substantiellement au même taux que le reste de ladite portion gonflable dudit airbag (110), **caractérisé en ce que**
ledit airbag (110) comprend en outre une région non gonflable (128), la distance longitudinale (Dₓ) depuis ledit deuxième point d'extrémité (150) dudit deuxième joint interne (146) à ladite région non gonflable (128), étant comprise entre 50 % et 500 % de l'extension longitudinale (Lₓ) dudit deuxième joint interne (146), de préférence entre 60 % et 300 % et plus préférablement entre 80 % et 150 %, et ledit airbag (110) comprend en outre une entrée de gaz (154), ladite entrée de gaz (154) étant située au niveau dudit joint circonférentiel (122) dans un emplacement faisant face à ladite région non gonflable (128).

2. Airbag gonflable (110) selon la revendication 1, dans lequel le volume gonflé de ladite cellule d'airbag s'étendant longitudinalement (152) constitue au moins 4 %, de préférence au moins 7 % et plus préférablement au moins 10 % du volume gonflé de ladite portion au moins partiellement gonflable dudit airbag (110).

3. Airbag gonflable (110) selon la revendication 1 ou 2, dans lequel ladite cellule d'airbag s'étendant longitudinalement (152) est prévue de telle sorte que dans un état gonflé dudit airbag (110), ladite cellule d'airbag s'étendant longitudinalement (152) présente une plus longue extension dans ladite direction longitudinale (x) que dans lesdites directions en profondeur (y) et/ou en hauteur (z).

4. Airbag gonflable (110) selon l'une quelconque des revendications précédentes, dans lequel ladite cellule d'airbag s'étendant longitudinalement (152) est prévue pour être remplie avec un flux de gaz orienté substantiellement longitudinalement au cours du déploiement dudit airbag (110).

5. Airbag gonflable (110) selon l'une quelconque des revendications précédentes, dans lequel ledit airbag (110) comprend un premier côté longitudinal (112) comprenant un moyen de fixation (114) pour attacher ledit airbag (110) à un rail incliné du véhicule, et un deuxième côté longitudinal (116) opposé au premier côté longitudinal (112) lorsque ledit airbag (110) est déployé, ladite cellule d'airbag s'étendant longitudinalement (152) étant située le long dudit deuxième côté longitudinal (116) dudit airbag (110).

6. Airbag gonflable (110) selon l'une quelconque des revendications précédentes, dans lequel ledit deuxième joint interne (146) est disposé à une position en hauteur située entre 20 % et 80 % de la hauteur (h) de l'airbag dans un état aplati, de préférence entre 30 % et 70 % et plus préférablement entre 40 % et 60 %.

7. Airbag gonflable (110) selon l'une quelconque des revendications précédentes, dans lequel une distance longitudinale (Dₓ) depuis ledit deuxième point d'extrémité (150) dudit deuxième joint interne (146) à l'un quelconque desdits au moins un premier joint interne (124, 126) dudit airbag (110) est comprise entre 50 % et 500 % de l'extension longitudinale (Lₓ) dudit deuxième joint interne (146), de préférence entre 60 % et 300 % et plus préférablement entre 80 % et 150 %.

8. Airbag gonflable (110) selon l'une quelconque des revendications précédentes, dans lequel la largeur (w(x)) dudit deuxième joint interne (146) varie le long de son extension longitudinale, de telle sorte que le deuxième joint interne (146) soit plus large au niveau du premier point d'extrémité (148) qu'au niveau du deuxième point d'extrémité (150), par exemple en ayant une forme triangulaire avec la base dudit triangle passant par ledit premier point d'extrémité (148).

9. Airbag gonflable (110) selon l'une quelconque des revendications précédentes, dans lequel ladite au moins une desdites première ou deuxième portions d'extrémité longitudinales (134, 136) comprend une pluralité desdits deuxièmes joints internes (146).

10. Airbag gonflable (110) selon l'une quelconque des revendications précédentes, dans lequel les deux desdites première et deuxième portions d'extrémité longitudinales (134, 136) dudit airbag (110) comprennent au moins l'un desdits deuxième joints internes (146).

11. Airbag gonflable (110) selon l'une quelconque des revendications précédentes, dans lequel ladite région non gonflable (128) forme un canal supérieur (130) et un canal inférieur (132) dudit airbag (110) au cours du déploiement.

12. Airbag gonflable (110) selon l'une quelconque des revendications précédentes, dans lequel ladite cellule d'airbag s'étendant longitudinalement (152) est située au niveau d'un coin inférieur arrière (158) et/ou d'un coin inférieur avant (160).

13. Véhicule comprenant un airbag gonflable (110) selon l'une quelconque des revendications précédentes, ledit véhicule comprenant un rail incliné courbe (156), ledit deuxième joint interne (146) contractant ledit airbag gonflable (110) dans ladite direction en hauteur (z) au cours du déploiement dudit airbag, de telle sorte que l'amplitude de ladite contraction corresponde essentiellement à la courbure dudit rail incliné dans ladite direction en hauteur (z).
